# EUROPEAN PATENT APPLICATION

(11) **EP 4 822 098 A1**
(43) Date of publication of application: **14.10.2026**
(21) Application number: 26169123.2
(22) Date of filing: 30.03.2026
(51) Int. Cl.: E02F 9/16, E02F 9/24

(54) **WORK MACHINE AND CONTROL DEVICE**

(30) Priority: 07.04.2025 JP 2025062842
(71) Applicant: Sumitomo Heavy Industries, Ltd., Tokyo 141-6025 (JP)
(72) Inventor: SHINATO, Ayano, Kanagawa, 237-8555, (JP)
(74) Representative: Louis Pöhlau Lohrentz

(57) **Abstract**

To reduce safety risk and increase in the load on a work machine including an elevator cab, caused due to a traveling state of the machine in a state in which the elevator cab is elevated, a work machine including an elevator cab includes a control part configured to determine, based on information on a driving state of the work machine, whether a traveling state of the work machine is a predetermined traveling state in a state in which the elevator cab is elevated, and output an alert when determining that the traveling state of the work machine is the predetermined traveling state in the state in which the elevator cab is elevated.

## Description

### BACKGROUND OF THE INVENTION

### Field of the Invention

The present disclosure relates to a work machine and a control device.

### Description of the Related Art

Excavators including a height-adjustable elevator cab as a cab on which an excavator operator rides have been known. Excavators including an elevator cab use, for example, a lifting magnet for lifting an object by magnetic force, as an end attachment, and the capability of seeing the object from a high position makes it possible to improve the work efficiency. In addition, by performing work from an elevated elevator cab, it is possible to substantially prevent an object lifted by the lifting magnet from falling down and colliding with the elevator cab.

### SUMMARY OF THE INVENTION

In consideration of the safety risk and an increase in the load on the machine, it is not desirable that a work machine, such as an excavator including an elevator cab, travels in a state in which the elevator cab is elevated. Specifically, when the work machine travels in a state in which the elevator cab is elevated, the risk of tipping over increases because the center of gravity rises, and the operator's visual field is limited to make it difficult to know the surrounding situation. In addition, when the work machine travels in a state in which the elevator cab is elevated, a large load is applied to the mechanism for moving up and down the elevator cab, which becomes a cause of a failure.

Therefore, for a work machine including an elevator cab, it is preferable to reduce the safety risk and an increase in the load on the machine, which are caused due to the traveling state of the work machine in a state in which the elevator cab is elevated.

In order to achieve the above object, a work machine of the present disclosure is a work machine including an elevator cab, wherein the work machine includes a control part configured to determine, based on information on a driving state of the work machine, whether a traveling state of the work machine is a predetermined traveling state in a state in which the elevator cab is elevated, and output an alert when determining that the traveling state of the work machine is the predetermined traveling state in the state in which the elevator cab is elevated.

According to the present disclosure, for a work machine including an elevator cab, it is possible to reduce the safety risk and an increase in the load on the machine, which are caused due to the traveling state of the work machine in a state in which the elevator cab is elevated.

### BRIEF DESCRIPTION OF THE DRAWINGS

FIG. 1 is a schematic view of an entirety of a work machine according to an embodiment;
FIG. 2 is a view showing a cab elevation device of a work machine according to an embodiment;
FIG. 3 is a diagram showing an example configuration of a basic system of a work machine according to an embodiment;
FIG. 4 is a schematic diagram showing an example configuration of a hydraulic system mounted on the work machine of FIG. 1;
FIG. 5 is a diagram explaining the functional configuration of a controller;
FIG. 6 is a diagram showing an example of a system including a work machine;
FIG. 7 is a flowchart for explaining a first embodiment of an alert output operation of a work machine;
FIG. 8 is a flowchart for explaining a second embodiment of an alert output operation of a work machine; and
FIG. 9 is a flowchart for explaining a third embodiment of an alert output operation of a work machine.

### DETAILED DESCRIPTION OF THE DISCLOSURE

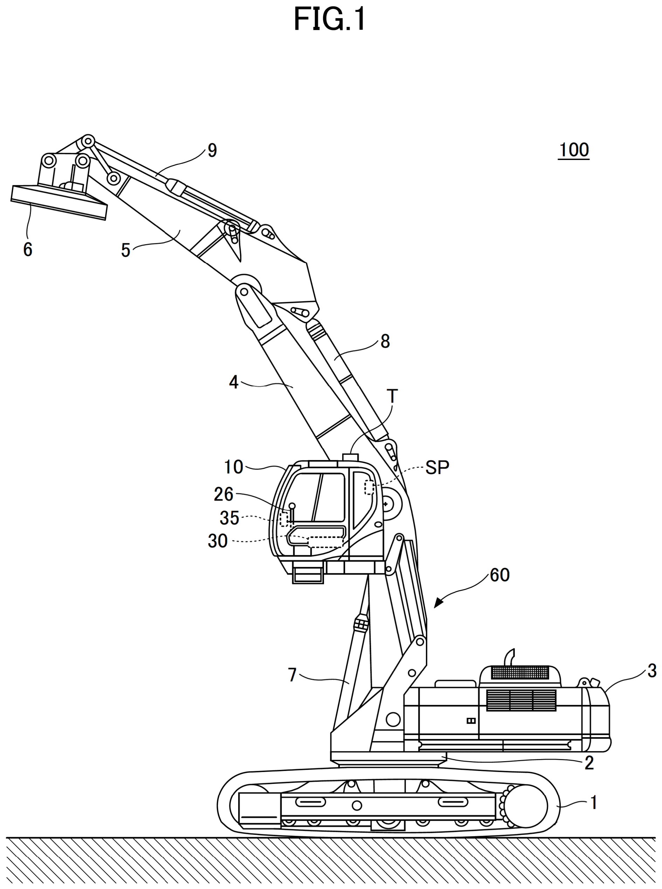

An embodiment for carrying out the invention will be described below with reference to the drawings. FIG. 1 is a schematic view of the entirety of a work machine according to the present embodiment.

A work machine 100 includes a lower traveling body 1, a rotating mechanism 2, an upper rotating body 3, a boom 4, an arm 5, an end attachment 6, a boom cylinder 7, an arm cylinder 8, an end attachment cylinder 9, a cab (cockpit) 10, an operation device 26, a controller (control device) 30, a display device 35, and the like. The operation device 26, the controller (control device) 30, a loudspeaker SP, and the display device 35 are provided in the cab 10.

The upper rotating body 3 is rotatably mounted on the lower traveling body 1 of the work machine 100 via the rotating mechanism 2. The boom 4 is pivotally connected to the front center part of the upper rotating body 3. The arm 5 is pivotally connected to the tip of the boom 4. The end attachment 6 is pivotally connected to the tip of the arm 5. In the present embodiment, the end attachment 6 is a lifting magnet. However, other end attachments, such as a grapple, a disassembly fork, and the like may be attached depending on the type of the work.

The cab 10 is provided on the upper rotating body 3 so as to be able to be moved up and down via a cab elevation device 60. In the following description, such a cab that can be moved up and down may be referred to as an "elevator cab". FIG. 1 shows a state in which the cab 10 is elevated to the highest position by the cab elevation device 60. The cab 10 is disposed on a side (usually, on the left side) of the boom 4.

The upper rotating body 3 is provided with a communication device T that is attached to the cab 10. The communication device T controls communication with external devices that are located outside the work machine 100. **In** the present embodiment, the communication device T controls communication with external devices via a communication line, such as a satellite communication network, a cellular phone communication network, the Internet network, or the like.

The operation device 26 is a device used by an operator to operate hydraulic actuators. The operation device 26 supplies a hydraulic oil discharged from a pilot pump to pilot ports of flow rate control valves corresponding to the respective hydraulic actuators through a pilot line. However, the only requirement in the control method of the hydraulic actuators is that the hydraulic actuators should be driven in accordance with the amount of operation on the operation device 26, and the control method may be configured as an appropriate method. For example, the controller 30 that converts the amount of operation on the operation device 26 into other information, such as voltage and the like, may calculate the amount by which a hydraulic actuator is driven.

The controller 30 is an example of a control part according to the present disclosure. The controller 30 is a control device for controlling the work machine 100, and includes, for example, a computer including a CPU, a RAM, a ROM, a non-volatile memory, and the like. The controller 30 reads out programs corresponding to various functional components from the ROM, loads them into the RAM, and causes the CPU to execute processes corresponding to the various functional components.

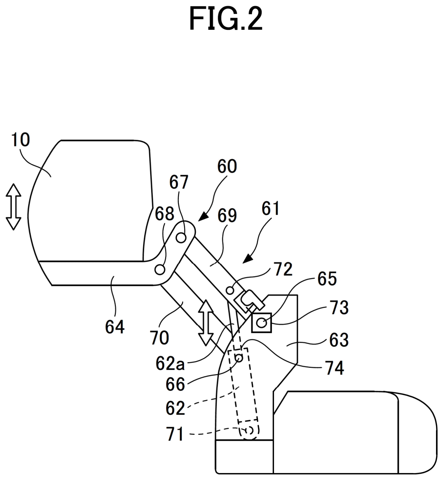

Next, the details of the cab elevation device 60 will be described with reference to FIG. 2. FIG. 2 is a view showing the cab elevation device of the work machine according to the present embodiment.

As shown in FIG. 2, the cab elevation device 60 includes a parallel link mechanism 61 that keeps the cab 10 in a predetermined posture (horizontal state), and a cab elevation cylinder 62 that drives the parallel link mechanism 61 to drive the cab 10 to be moved up and down.

The parallel link mechanism 61 includes a support tower 63 erected on the upper rotating body 3, an L-shaped stand 64 that supports the cab 10 from under the cab 10, and an upper link 69 and a lower link 70 that are pivotally connected between the support tower 63 and the stand 64. Specifically, the stand 64 is integrally provided on the lower part of the cab 10.

The upper end of the upper link 69 is connected to the stand 64 via an upper end-side pin 67, and the lower end thereof is connected to the support tower 63 via a lower end-side pin 65. The upper end of the lower link 70 is connected to the stand 64 via an upper end-side pin 68, and the lower end thereof is connected to the support tower 63 via a lower end-side pin 66. Although not shown in FIG. 2 because it is a side view, a pair of left and right upper links 69 and a pair of left and right lower links 70 are provided.

The cab elevation cylinder 62 controls the pivoting of the upper link 69 and the lower link 70. Specifically, the base end of the cab elevation cylinder 62 is pivotally supported on the lower part of the support tower 63 via a cylinder pin 71. The tip end of a rod 62a of the cab elevation cylinder 62 is connected to a connecting member (not shown) between the pair of left and right upper links 69 via a rod pin 72.

With this configuration, the cab elevation device 60 is driven to be moved up and down by a hydraulic oil being supplied from a hydraulic pump to the cab elevation cylinder 62. Specifically, by extending and contracting the cab elevation cylinder 62, the cab elevation device 60 can move the cab 10 up and down while causing the upper links 69 and the lower links 70 to draw arcs while being supported on the lower end-side pins 65 and 66. In addition to moving in the vertical direction, the cab 10 also moves in the front-rear direction.

The cab elevation device 60 has an angle sensor 73. Specifically, the angle sensor 73 is provided on one end of the pivoting shaft of the lower end-side pin 65 and detects the pivoting angle of the upper links 69 from the initial position thereof. The initial position is the position when the cab 10 is at the lowest position. The angle sensor 73 is provided to prevent interference between the cab 10 and the end attachment 6.

Specifically, the position of the cab 10 is calculated based on the angle detected by the angle sensor 73, and when it is determined that the relative distance between the cab 10 and the end attachment 6 in the front-rear direction becomes shorter than a predetermined distance, interference-avoiding control is performed. In the interference-avoiding control, for example, the movements of the boom 4, the arm 5, and the like are controlled to become slow regardless of the operation of the operator.

The angle sensor 73 may be any angle sensor, and, for example, a rotary potentiometer or the like is used. The angle sensor 73 may be provided at one end of the pivoting shaft of the lower end-side pin 66 of the lower links 70 to detect the pivoting angle of the lower links 70 from the initial position thereof.

A cylinder length sensor 74 is attached to the cab elevation cylinder 62. The cylinder length sensor 74 is an example of a first sensing part of the present disclosure. The cylinder length sensor 74 detects the length of the cab elevation cylinder 62. Therefore, the height of the cab 10 can be detected based on the length of the cab elevation cylinder 62 detected by the cylinder length sensor 74.

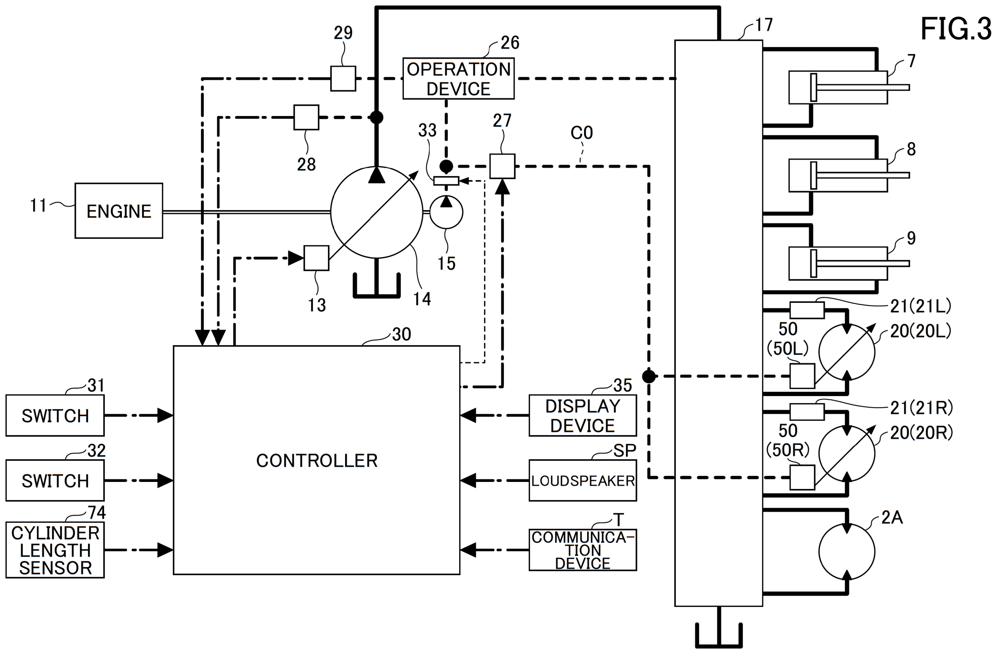

Next, the basic system of the work machine 100 of the present embodiment will be described with reference to FIG. 3. FIG. 3 is a diagram showing an example of the configuration of the basic system of the work machine according to the present embodiment.

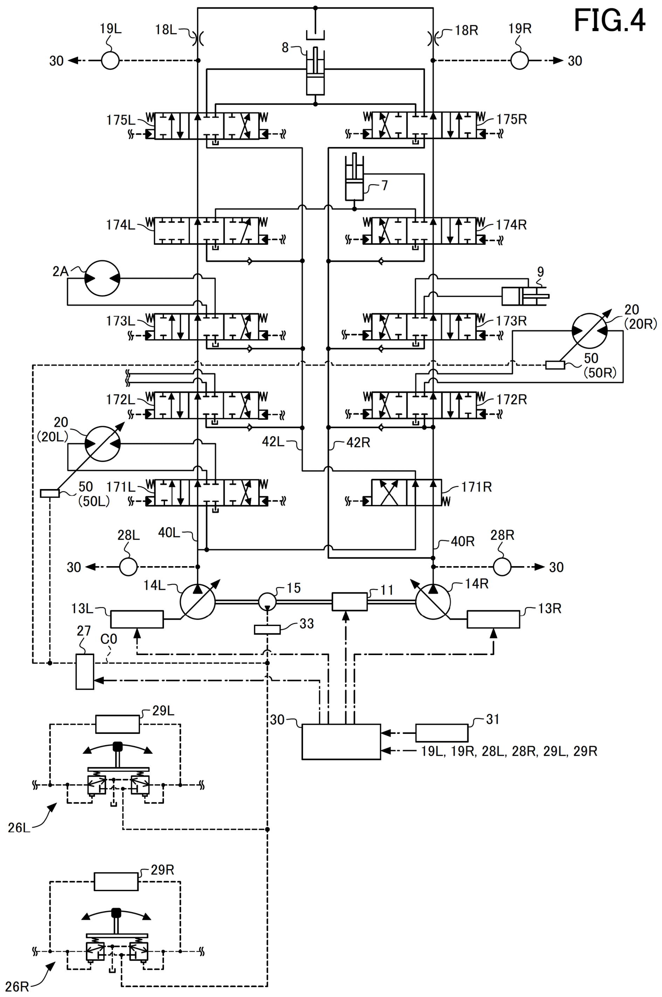

**In** FIG. 3, mechanical power transmission lines, hydraulic oil lines, pilot lines, and electric control lines are indicated by double lines, solid lines, broken lines, and dashed lines, respectively. The same applies to FIG. 4.

The basic system of the work machine 100 mainly includes an engine 11, a pump regulator 13, a main pump 14, a control pump 15, a control valve 17, the operation device 26, a solenoid valve 27, a discharge pressure sensor 28, an operation pressure sensor 29, a controller 30, switches 31 and 32, motor regulators 50, and the like.

The engine 11 is a driving source of the work machine 100. In the present embodiment, the engine 11 is, for example, a diesel engine as an internal combustion engine that operates to maintain a predetermined rotational speed. The output shaft of the engine 11 is connected to the input shafts of the main pump 14 and the control pump 15.

The main pump 14 is a device for supplying the hydraulic oil to the control valve 17 through the hydraulic oil lines, and is, for example, a swash plate-type variable displacement hydraulic pump.

The pump regulator 13 is a device for controlling the discharge amount of the main pump 14. In the present embodiment, for example, the pump regulator 13 controls the discharge amount of the main pump 14 by adjusting the swash plate tilt angle of the main pump 14 in accordance with the discharge pressure of the main pump 14, an instruction current from the controller 30, and the like.

The control pump 15 is a device for supplying the hydraulic oil to various hydraulic control devices including the operation device 26, and is, for example, a fixed displacement hydraulic pump.

The control valve 17 is a hydraulic control device for controlling the hydraulic system of the work machine 100.

Specifically, the control valve 17 includes a plurality of controlling valves for controlling the flow of the hydraulic oil discharged from the main pump 14. The control valve 17 supplies the hydraulic oil discharged from the main pump 14 selectively to one or more hydraulic actuators via these controlling valves. The controlling valves control the flow rate of the hydraulic oil flowing from the main pump 14 to the hydraulic actuators and the flow rate of the hydraulic oil flowing from the hydraulic actuators to a hydraulic oil tank.

The hydraulic actuators include the boom cylinder 7, the arm cylinder 8, the end attachment cylinder 9, traveling hydraulic motors 20, and a rotation hydraulic motor 2A. The traveling hydraulic motors 20 include a left traveling hydraulic motor 20L and a right traveling hydraulic motor 20R.

The hydraulic oil lines of the left traveling hydraulic motor 20L and the right traveling hydraulic motor 20R are provided with flow velocity sensors 21 for detecting the flow velocity of the hydraulic oil supplied to the left traveling hydraulic motor 20L and the right traveling hydraulic motor 20R, respectively. Specifically, the hydraulic oil line of the left traveling hydraulic motor 20L is provided with a flow velocity sensor 21L for detecting the flow velocity of the hydraulic oil supplied to the left traveling hydraulic motor 20L. The hydraulic oil line of the right traveling hydraulic motor 20R is provided with a flow velocity sensor 21R for detecting the flow velocity of the hydraulic oil supplied to the right traveling hydraulic motor 20R. These flow velocity sensors 21L and 21R are an example of a second sensing part of the present disclosure.

The operation device 26 is a device used by an operator to operate the hydraulic actuators. **In** the present embodiment, the operation device 26 is a hydraulic type, and supplies the hydraulic oil discharged from the control pump 15 to the pilot ports of the controlling valves corresponding to the hydraulic actuators, respectively, through the pilot lines.

The pressure of the hydraulic oil supplied to each pilot port (hereinafter referred to as "pilot pressure") is a pressure corresponding to the operation direction and the operation amount in and by which levers or pedals, which are constituents of the operation device 26 and correspond to the hydraulic actuators, respectively, are operated. However, the operation device 26 may be an electric type.

The solenoid valve 27 is situated on a line C0 between the control pump 15 and the motor regulators 50. In the present embodiment, the solenoid valve 27 is an electromagnetic switching valve for switching between electrical conduction and shutoff of the line C0, and operates in response to an instruction from the controller 30.

A pressure reducing valve 33 is situated on a line between the control pump 15 and the operation device 26 and solenoid valve 27. In the present embodiment, the pressure reducing valve 33 reduces the pilot pressure and operates in response to an instruction from the controller 30.

The discharge pressure sensor 28 is a sensor for detecting the discharge pressure of the main pump 14, and outputs the detected value to the controller 30.

The operation pressure sensor 29 detects the content of an operation of the operator via the operation device 26. In the present embodiment, the operation pressure sensor 29 is a pressure sensor for detecting the operation direction in which and the operation amount by which the levers or the pedals, which are constituents of the operation device 26 and correspond to the hydraulic actuators, respectively, are operated, in the form of, for example, pressure, and outputs the detected value to the controller 30.

The content of an operation on the operation device 26 may be detected using the output from any devices other than a pressure sensor, such as an operation angle sensor, an acceleration sensor, an angular velocity sensor, a resolver, a voltmeter, an ammeter, and the like. That is, the operation amount of the operation device 26 may be expressed not only in the form of an operation pressure, but also in the form of an operation angle, a double integral of operation accelerations, an integral of operation angular velocities, a voltage value, a current value, and the like.

The controller 30 is a control device for controlling the work machine 100. In the present embodiment, the controller 30 is constituted by, for example, a computer including a CPU, a volatile memory device, a non-volatile memory device, and the like. The controller 30 causes the CPU to execute programs corresponding to various functional components, such as a traveling mode control part 300.

The switches 31 and 32, the display device 35, the loudspeaker SP, and the communication device T are connected to the controller 30.

The switch 31 is a switch for switching the operation mode (traveling mode) of the motor regulators 50. In the present embodiment, the switch 31 is a software switch displayed on a vehicle-mounted display with a touch panel. The switch 31 may be a hardware switch installed in the cab 10.

The switch 32 is a switch for switching an operation for moving the cab 10 up and an operation for moving the cab 10 down. The switch 32 may be, for example, a hardware switch installed in the cab 10, and switches between moving the cap 10 up and moving the cab 10 down depending on operations. In the present embodiment, the position of the cab 10 does not move when the switch 32 is not operated.

The display device 35 is an example of a display part of the present disclosure. The display device 35 is configured to display and output an alert described later. The display device 35 is provided in front of the driver's seat in the cab 10 such that the operator of the work machine 100 can visually recognize the display contents. The switches 31 and 32 may be configured in the form of a touch panel on the display device 35.

The loudspeaker SP is an example of a sound output part of the present disclosure. The loudspeaker SP is configured to output an alert described later by sound. The loudspeaker SP may be provided behind the driver's seat in the cab 10 or in front of the driver's seat together with the display device 35.

The motor regulators 50 control the motor volume of the traveling hydraulic motors 20. In the present embodiment, the motor regulators 50 include a left motor regulator 50L and a right motor regulator 50R. The left motor regulator 50L controls the motor volume of the left traveling hydraulic motor 20L by adjusting the swash plate tilt angle of the left traveling hydraulic motor 20L in accordance with the control pressure of the hydraulic oil supplied via the solenoid valve 27. The same applies to the right motor regulator 50R.

Concretely, the left motor regulator 50L can switch the motor volume of the left traveling hydraulic motor 20L between two stages, namely, a high rotation setting and a low rotation setting, by switching the swash plate tilt angle of the left traveling hydraulic motor 20L between two stages.

The low rotation setting is realized by increasing the motor volume. In this case, the left traveling hydraulic motor 20L operates at a high torque at low RPMs. The high rotation setting is realized by reducing the motor volume. In this case, the left traveling hydraulic motor 20L operates at a low torque at high RPMs. The same applies to the right motor regulator 50R.

The controller 30 performs various processes described later based on the outputs from, for example, the discharge pressure sensor 28, the operation pressure sensor 29, the switch 31, and the like. Details of the functions of the controller 30 will be described later.

Next, referring to FIG. 4, the hydraulic system mounted on the work machine 100 will be described. FIG. 4 is a schematic diagram showing an example of the configuration of the hydraulic system mounted on the work machine of FIG. 1.

The hydraulic system of FIG. 4 circulates the hydraulic oil from main pumps 14L and 14R driven by the engine 11 to the hydraulic oil tank through center bypass lines 40L and 40R and parallel lines 42L and 42R. The main pumps 14L and 14R correspond to the main pump 14 of FIG. 3.

The center bypass line 40L is a hydraulic oil line passing through the controlling valves 171L to 175L located in the control valve 17. The center bypass line 40R is a hydraulic oil line passing through the controlling valves 171R to 175R located in the control valve 17.

The controlling valve 171L is a spool valve that supplies the hydraulic oil discharged from the main pump 14L to the left traveling hydraulic motor 20L and switches the flow of the hydraulic oil to eject the hydraulic oil discharged from the left traveling hydraulic motor 20L to the hydraulic oil tank.

The controlling valve 171R is a spool valve serving as a straight travel valve. The controlling valve 171R switches the flow of the hydraulic oil such that the hydraulic oil is supplied from the main pump 14L to each of the left traveling hydraulic motor 20L and the right traveling hydraulic motor 20R in order to enhance the straight traveling performance of the lower traveling body 1. Specifically, when the traveling hydraulic motors 20 and any other hydraulic actuator are operated simultaneously, the controlling valve 171R is switched such that the main pump 14L can supply the hydraulic oil to both the left traveling hydraulic motor 20L and the right traveling hydraulic motor 20R. When none of the other hydraulic actuators are operated, the controlling valve 171R is switched such that the main pump 14L can supply the hydraulic oil to the left traveling hydraulic motor 20L and the main pump 14R can supply the hydraulic oil to the right traveling hydraulic motor 20R.

The controlling valve 172L is a spool valve that supplies the hydraulic oil discharged from the main pump 14L to an optional hydraulic actuator and switches the flow of the hydraulic oil to eject the hydraulic oil discharged from the optional hydraulic actuator to the hydraulic oil tank. The optional hydraulic actuator is, for example, a grapple opening/closing cylinder.

The controlling valve 172R is a spool valve that supplies the hydraulic oil discharged from the main pump 14R to the right traveling hydraulic motor 20R and switches the flow of the hydraulic oil to eject the hydraulic oil discharged from the right traveling hydraulic motor 20R to the hydraulic oil tank.

The controlling valve 173L is a spool valve that supplies the hydraulic oil discharged from the main pump 14L to the rotation hydraulic motor 2A and switches the flow of the hydraulic oil to eject the hydraulic oil discharged from the rotation hydraulic motor 2A to the hydraulic oil tank.

The controlling valve 173R is a spool valve that supplies the hydraulic oil discharged from the main pump 14R to the end attachment cylinder 9 and ejects the hydraulic oil in the end attachment cylinder 9 to the hydraulic oil tank.

The controlling valves 174L and 174R are spool valves that supply the hydraulic oil discharged from the main pumps 14L and 14R to the boom cylinder 7 and switch the flow of the hydraulic oil to eject the hydraulic oil in the boom cylinder 7 to the hydraulic oil tank. In the present embodiment, the controlling valve 174L operates only when an operation for raising the boom 4 is performed and does not operate when an operation for lowering the boom 4 is performed.

The controlling valves 175L and 175R are spool valves that supply the hydraulic oil discharged from the main pumps 14L and 14R to the arm cylinder 8 and switch the flow of the hydraulic oil to eject the hydraulic oil in the arm cylinder 8 to the hydraulic oil tank.

The parallel line 42L is a hydraulic oil line parallel with the center bypass line 40L. The parallel line 42L can supply the hydraulic oil to the downstream controlling valves when the flow of the hydraulic oil flowing through the center bypass line 40L is restricted or interrupted by any of the controlling valves 171L to 174L. The parallel line 42R is a hydraulic oil line parallel with the center bypass line 40R. The parallel line 42R can supply the hydraulic oil to the downstream controlling valves when the flow of the hydraulic oil flowing through the center bypass line 40R is restricted or interrupted by any of the controlling valves 172R to 174R.

Pump regulators 13L and 13R control the discharge amount of the main pumps 14L and 14R by adjusting the swash plate tilt angle of the main pumps 14L and 14R in accordance with the discharge pressure of the main pumps 14L and 14R. The pump regulators 13L and 13R correspond to the pump regulator 13 shown in FIG. 3. For example, the pump regulators 13L and 13R reduce the discharge amount by adjusting the swash plate tilt angle of the main pumps 14L and 14R when the discharge pressure of the main pumps 14L and 14R increases. This is in order to not allow the absorbed power of the main pump 14, expressed as the product of the discharge pressure and the discharge amount, to exceed the horsepower of the engine 11.

A left traveling operation device 26L and a right traveling operation device 26R are examples of the operation device 26. In the present embodiment, each of them is configured as a combination of a traveling operation lever and a traveling operation pedal.

The left traveling operation device 26L is used to operate the left traveling hydraulic motor 20L. The left traveling operation device 26L applies a pilot pressure corresponding to the amount by which it is operated to the pilot port of the controlling valve 171L by using the hydraulic oil discharged from the control pump 15. Specifically, the left traveling operation device 26L applies a pilot pressure to the left pilot port of the controlling valve 171L when operated in the forward traveling direction, and applies a pilot pressure to the right pilot port of the controlling valve 171L when operated in the rearward traveling direction.

The right traveling operation device 26R is used to operate the right traveling hydraulic motor 20R. The right traveling operation device 26R applies a pilot pressure corresponding to the amount by which it is operated to the pilot port of the controlling valve 172R by using the hydraulic oil discharged from the control pump 15. Specifically, the right traveling operation device 26R applies a pilot pressure to the right pilot port of the controlling valve 172R when operated in the forward traveling direction, and applies a pilot pressure to the left pilot port of the controlling valve 172R when operated in the rearward traveling direction.

The solenoid valve 27 brings the control pump 15 and the motor regulators 50 into communication while receiving a communication instruction from the controller 30. In this case, the motor regulators 50 operate in a forced fixed mode. On the other hand, the solenoid valve 27 interrupts communication between the control pump 15 and the motor regulators 50 while receiving no communication instruction from the controller 30. In this case, the motor regulators 50 operate in a variable mode.

The pressure reducing valve 33 controls the stroking amount (displacement amount) of the spool of each of the controlling valves 171L and 172R in accordance with an instruction from the controller 30. **In** the present embodiment, the pressure reducing valve 33 is not indispensable when flow rate reduction is performed by the traveling hydraulic motors 20, the main pumps 14, the engine 11, and the like.

Discharge pressure sensors 28L and 28R are examples of the discharge pressure sensor 28 shown in FIG. 3. The discharge pressure sensor 28L detects the discharge pressure of the main pump 14L and outputs the detected value to the controller 30. The discharge pressure sensor 28R detects the discharge pressure of the main pump 14R and outputs the detected value to the controller 30.

Operation pressure sensors 29L and 29R are examples of the operation pressure sensor 29 shown in FIG. 3. The operation pressure sensor 29L detects the content of an operation of the operator on the left traveling operation device 26L in the form of a pressure and outputs the detected value to the controller 30. The operation pressure sensor 29R detects the content of an operation of the operator on the right traveling operation device 26R in the form of a pressure and outputs the detected value to the controller 30. The content of an operation is, for example, an operation direction, an operation amount (operation angle), and the like.

A boom operation lever, an arm operation lever, a bucket operation lever, and a rotating operation lever (none of them shown) are operation devices for operating the boom 4 to be raised or lowered, the arm 5 to be opened or closed, the end attachment 6 to be opened or closed, and the rotation of the upper rotating body 3. These operation devices, like the left traveling operation device 26L, use the hydraulic oil discharged from the control pump 15 to apply a pilot pressure corresponding to the lever operation amount to either the left or the right pilot port of the controlling valves corresponding to the respective hydraulic actuators. The content of an operation on each of these operation devices by the operator is detected in the form of a pressure by a corresponding operation pressure sensor, like done by the operation pressure sensor 29L, and the detected value is output to the controller 30.

Negative control employed in the hydraulic system shown in FIG. 4 will now be described.

The center bypass lines 40L and 40R are provided with negative control throttles 18L and 18R between each of the controlling valves 175L and 175R located at farthest downstream and the hydraulic oil tank. The flow of the hydraulic oil discharged from the main pumps 14L and 14R is restricted by the negative control throttles 18L and 18R. The negative control throttles 18L and 18R generate control pressures (hereinafter referred to as "NEGACON pressures") for controlling the pump regulators 13L and 13R.

Negative control pressure sensors 19L and 19R detect the negative control pressures generated upstream of the negative control throttles 18L and 18R. In the present embodiment, the negative control pressure sensors 19L and 19R output the detected values to the controller 30.

The controller 30 outputs instructions corresponding to the negative control pressures to the pump regulators 13L and 13R. The pump regulators 13L and 13R control the discharge amounts of the main pumps 14L and 14R by adjusting the swash plate tilt angles of the main pumps 14L and 14R in accordance with the instructions. Specifically, the pump regulators 13L and 13R reduce the discharge amounts of the main pumps 14L and 14R by more for higher negative control pressures, and increase the discharge amounts of the main pumps 14L and 14R by more for lower negative control pressures.

When none of the hydraulic actuators is operated, the hydraulic oil discharged from the main pumps 14L and 14R flows through the center bypass lines 40L and 40R and reaches the negative control throttles 18L and 18R. The flow of the hydraulic oil discharged from the main pumps 14L and 14R increases the negative control pressures generated upstream of the negative control throttles 18L and 18R. As a result, the pump regulators 13L and 13R reduce the discharge amounts of the main pumps 14L and 14R to the tolerable minimum discharge amounts, to inhibit pressure loss (pumping loss) when the discharged hydraulic oil flows through the center bypass lines 40L and 40R.

On the other hand, when any hydraulic actuator is operated, the hydraulic oil discharged from the main pumps 14L and 14R flows into the operation-target hydraulic actuator via the controlling valve corresponding to the operation-target hydraulic actuator. This reduces the amount by which the flow of the hydraulic oil discharged from the main pumps 14L and 14R reaches the negative control throttles 18L and 18R or completely eliminates such a flow, to thereby reduce the negative control pressures to be generated upstream of the negative control throttles 18L and 18R. As a result, the pump regulators 13L and 13R increase the discharge amounts of the main pumps 14L and 14R, and circulate the hydraulic oil sufficiently to the operation-target hydraulic actuator, to ensure that the operation-target hydraulic actuator is driven securely.

With the above-described configuration, the hydraulic system of FIG. 4 can inhibit wasteful energy consumption by the main pumps 14L and 14R when none of the hydraulic actuators are operated. Wasteful energy consumption includes pumping loss generated in the center bypass lines 40L and 40R by the hydraulic oil discharged from the main pumps 14L and 14R. When any hydraulic actuator is operated, the above-described configuration ensures that the necessary and sufficient amount of hydraulic oil can be reliably supplied to the operation-target hydraulic actuator from the main pumps 14L and 14R.

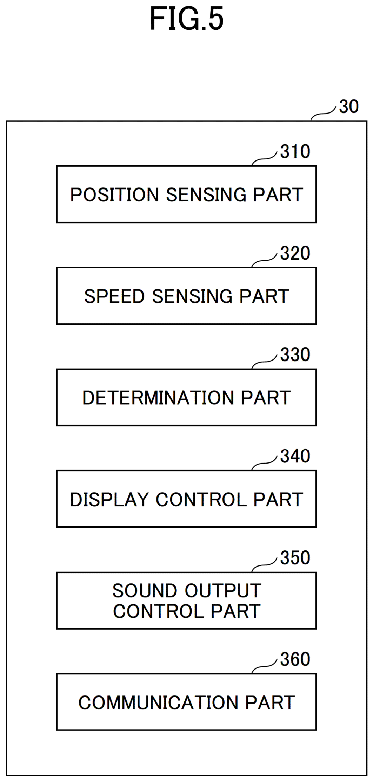

Next, the functional configuration of the controller 30 of the present embodiment will be described with reference to FIG. 5. FIG. 5 is a diagram explaining the functional configuration of the controller.

The functions of each part shown in FIG. 5 are realized by the CPU of the controller 30 reading out and executing a program stored in a memory device, such as a ROM and the like.

The controller 30 of the present embodiment includes a position sensing part 310, a speed sensing part 320, a determination part 330, a display control part 340, a sound output control part 350, and a communication part 360.

The position sensing part 310 detects the position of the cab 10. The height of the cab 10 may be based on the height of the cab in a state in which the cab 10 is completely moved down.

Specifically, the position sensing part 310 of the present embodiment senses the height of the cab 10 based on the length of the cab elevation cylinder 62 detected by the cylinder length sensor 74. The position sensing part 310 may also sense the height of the cab 10 by detecting a cylinder pressure applied to the cab elevation cylinder 62. The position sensing part 310 may sense the height of the cab 10 based on an output from the angle sensor 73. Furthermore, the position sensing part 310 may sense the position of the cab 10 based on an operation on the switch 32. The position sensing part 310 may sense the position (height) of the cab 10 in accordance with, for example, the duration of an instruction for moving the cab 10 up, input from the switch 32.

The speed sensing part 320 senses the traveling state of the work machine 100. Specifically, the speed sensing part 320 of the present embodiment senses the traveling state of the work machine 100 based on the flow velocity of the hydraulic oil detected by the flow velocity sensors 21L and 21R. As described above, the flow velocity sensors 21L and 21R detect the flow velocity of the hydraulic oil supplied to the left traveling hydraulic motor 20L and the right traveling hydraulic motor 20R. Therefore, the speed sensing part 320 can sense the traveling state (traveling or stopping, as well as traveling speed) of the work machine 100 based on the flow velocity of the hydraulic oil detected by the flow velocity sensors 21L and 21R. The speed sensing part 320 may sense the traveling state of the work machine 100 by sensing the hydraulic pressure of the hydraulic oil supplied to the left traveling hydraulic motor 20L and the right traveling hydraulic motor 20R. The speed sensing part 320 may sense the traveling state of the work machine 100 based on the speed measured by the traveling speedometer attached to the work machine 100.

The determination part 330 determines whether the traveling state of the work machine 100 is a predetermined traveling state in a state in which the cab 10 is elevated, based on information on the driving state of the work machine 100. Specifically, the determination part 330 determines whether the traveling state of the work machine 100 is a predetermined traveling state in a state in which the cab 10 is elevated, by using the sensing result of the position sensing part 310 and the sensing result of the speed sensing part 320 as the information on the driving state of the work machine 100. Here, the sensing result of the position sensing part 310 is, for example, the height of the cab 10 sensed based on the length of the cab elevation cylinder 62 detected by the cylinder length sensor 74. That is, it is a sensing result of the first sensing part, such as the cylinder length sensor 74 and the like. The sensing result of the speed sensing part 320 is, for example, the traveling state of the work machine 100 sensed based on the flow velocity of the hydraulic oil detected by the flow velocity sensors 21L and 21R. That is, it is a sensing result of the second sensing part, such as the flow velocity sensors 21L and 21R, and the like.

In this configuration, the determination part 330 determines whether the height of the cab 10 sensed by the position sensing part 310 is equal to or higher than a predetermined height and whether the traveling state of the work machine 100 sensed by the speed sensing part 320 indicates that the work machine 100 is traveling.

The determination part 330 determines whether the height of the cab 10 sensed by the position sensing part 310 is equal to or higher than the predetermined height, and whether the traveling state of the work machine 100 sensed by the speed sensing part 320 indicates that the work machine 100 has traveled a predetermined distance.

The determination part 330 determines whether the height of the cab 10 sensed by the position sensing part 310 is equal to or higher than the predetermined height, and whether the traveling state of the work machine 100 sensed by the speed sensing part 320 indicates that the work machine 100 has continued traveling for a predetermined time.

The determination part 330 determines whether the height of the cab 10 sensed by the position sensing part 310 is equal to or higher than the predetermined height, and whether the traveling state of the work machine 100 sensed by the speed sensing part 320 indicates that the work machine 100 is traveling at a speed equal to or higher than a predetermined speed.

The determination part 330 determines whether the height of the cab 10 sensed by the position sensing part 310 is equal to or higher than the predetermined height, and whether the traveling state of the work machine 100 sensed by the speed sensing part 320 indicates that the work machine 100 has traveled the predetermined distance at a speed equal to or higher than the predetermined speed.

The determination part 330 determines whether the height of the cab 10 sensed by the position sensing part 310 is equal to or higher than the predetermined height, and whether the traveling state of the work machine 100 sensed by the speed sensing part 320 indicates that the work machine 100 has continued traveling at a speed equal to or higher than the predetermined speed for the predetermined time.

The determination part 330 records the sensing result of the position sensing part 310 and the sensing result of the speed sensing part 320 as logs in time series.

The display control part 340 causes the display device 35 to display and output an alert serving as a warning when the determination part 330 determines that the traveling state of the work machine 100 is the predetermined traveling state in a state in which the cab 10 is elevated. Specifically, the display control part 340 causes the display device 35 to display and output an alert when the determination part 330 determines that the height of the cab 10 sensed by the position sensing part 310 is equal to or higher than a predetermined height and that the traveling state of the work machine 100 sensed by the speed sensing part 320 indicates that the work machine 100 is traveling. The display control part 340 causes the display device 35 to display and output an alert when the determination part 330 determines that the height of the cab 10 sensed by the position sensing part 310 is equal to or higher than the predetermined height and that the traveling state of the work machine 100 sensed by the speed sensing part 320 indicates that the work machine 100 has traveled the predetermined distance. The display control part 340 causes the display device 35 to display and output an alert when the determination part 330 determines that the height of the cab 10 sensed by the position sensing part 310 is equal to or higher than the predetermined height and that the traveling state of the work machine 100 sensed by the speed sensing part 320 indicates that the work machine 100 has continued traveling for the predetermined time. The display control part 340 causes the display device 35 to display and output an alert when the determination part 330 determines that the height of the cab 10 sensed by the position sensing part 310 is equal to or higher than the predetermined height and that the traveling state of the work machine 100 sensed by the speed sensing part 320 indicates that the work machine 100 is traveling at a speed equal to or higher than the predetermined speed. The display control part 340 causes the display device 35 to display and output an alert when the determination part 330 determines that the height of the cab 10 sensed by the position sensing part 310 is equal to or higher than the predetermined height and that the traveling state of the work machine 100 sensed by the speed sensing part 320 indicates that the work machine 100 has traveled the predetermined distance at a speed equal to or higher than the predetermined speed. The display control part 340 causes the display device 35 to display and output an alert when the determination part 330 determines that the height of the cab 10 sensed by the position sensing part 310 is equal to or higher than the predetermined height and that the traveling state of the work machine 100 sensed by the speed sensing part 320 indicates that the work machine 100 has continued traveling at a speed equal to or higher than the predetermined speed for the predetermined time.

The sound output control part 350 outputs an alert serving as a warning by sound from the loudspeaker SP when the determination part 330 determines that the traveling state of the work machine 100 is the predetermined traveling state in a state in which the cab 10 is elevated. Specifically, the sound output control part 350 outputs an alert by sound from the loudspeaker SP when the determination part 330 determines that the height of the cab 10 sensed by the position sensing part 310 is equal to or higher than a predetermined height and that the traveling state of the work machine 100 sensed by the speed sensing part 320 indicates that the work machine 100 is traveling. The sound output control part 350 outputs an alert by sound from the loudspeaker SP when the determination part 330 determines that the height of the cab 10 sensed by the position sensing part 310 is equal to or higher than the predetermined height and that the traveling state of the work machine 100 sensed by the speed sensing part 320 indicates that the work machine 100 has traveled the predetermined distance. The sound output control part 350 outputs an alert by sound from the loudspeaker SP when the determination part 330 determines that the height of the cab 10 sensed by the position sensing part 310 is equal to or higher than the predetermined height and that the traveling state of the work machine 100 sensed by the speed sensing part 320 indicates that the work machine 100 has traveled for the predetermined time. The sound output control part 350 outputs an alert by sound from the loudspeaker SP when the determination part 330 determines that the height of the cab 10 sensed by the position sensing part 310 is equal to or higher than the predetermined height and that the traveling state of the work machine 100 sensed by the speed sensing part 320 indicates that the work machine 100 is traveling at a speed equal to or higher than the predetermined speed. The sound output control part 350 outputs an alert by sound from the loudspeaker SP when the determination part 330 determines that the height of the cab 10 sensed by the position sensing part 310 is equal to or higher than the predetermined height and that the traveling state of the work machine 100 sensed by the speed sensing part 320 indicates that the work machine 100 has traveled the predetermined distance at a speed equal to or higher than the predetermined speed. The sound output control part 350 outputs an alert by sound from the loudspeaker SP when the determination part 330 determines that the height of the cab 10 sensed by the position sensing part 310 is equal to or higher than the predetermined height and that the traveling state of the work machine 100 sensed by the speed sensing part 320 indicates that the work machine 100 has continued traveling at a speed equal to or higher than the predetermined speed for the predetermined time.

The communication part 360 transmits an alert to an information output device via the communication line using the communication device T to cause the alert to be output via the information output device when the determination part 330 determines that the traveling state of the work machine 100 is the predetermined traveling state in a state in which the cab 10 is elevated. Specifically, the communication part 360 transmits an alert to the information output device via the communication line using the communication device T to cause the alert to be output via the information output device when the determination part 330 determines that the height of the cab 10 sensed by the position sensing part 310 is equal to or higher than the predetermined height and that the traveling state of the work machine 100 sensed by the speed sensing part 320 indicates that the work machine 100 is traveling. **In** addition, the communication part 360 transmits an alert to the information output device via the communication line using the communication device T to cause the alert to be output via the information output device when the determination part 330 determines that the height of the cab 10 sensed by the position sensing part 310 is equal to or higher than the predetermined height and that the traveling state of the work machine 100 sensed by the speed sensing part 320 indicates that the work machine 100 has traveled the predetermined distance. The communication part 360 transmits an alert to the information output device via the communication line using the communication device T to cause the alert to be output via the information output device when the determination part 330 determines that the height of the cab 10 sensed by the position sensing part 310 is equal to or higher than the predetermined height and that the traveling state of the work machine 100 sensed by the speed sensing part 320 indicates that the work machine 100 has continued traveling for the predetermined time. The communication part 360 transmits an alert to the information output device via the communication line using the communication device T to cause the alert to be output via the information output device when the determination part 330 determines that the height of the cab 10 sensed by the position sensing part 310 is equal to or higher than the predetermined height and that the traveling state of the work machine 100 sensed by the speed sensing part 320 indicates that the work machine 100 is traveling at a speed equal to or higher than the predetermined speed. The communication part 360 transmits an alert to the information output device via the communication line using the communication device T to cause the alert to be output via the information output device when the determination part 330 determines that the height of the cab 10 sensed by the position sensing part 310 is equal to or higher than the predetermined height and that the traveling state of the work machine 100 sensed by the speed sensing part 320 indicates that the work machine 100 has traveled the predetermined distance at a speed equal to or higher than the predetermined speed. The communication part 360 transmits an alert to the information output device via the communication line using the communication device T to cause the alert to be output via the information output device when the determination part 330 determines that the height of the cab 10 sensed by the position sensing part 310 is equal to or higher than the predetermined height and that the traveling state of the work machine 100 sensed by the speed sensing part 320 indicates that the work machine 100 has traveled at a speed equal to or higher than the predetermined speed for the predetermined time.

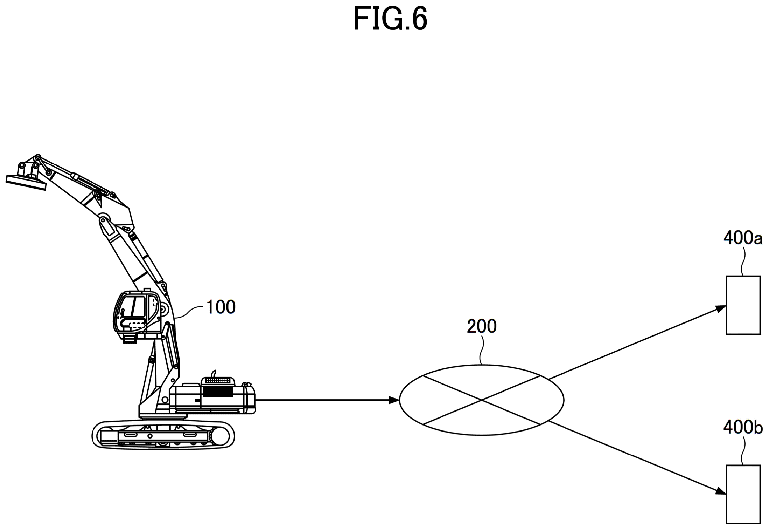

FIG. 6 is a diagram showing an example of a system including the work machine 100.

As shown in FIG. 6, the work machine 100 is configured to be connectable to information terminals 400a and 400b via a communication line 200. Specifically, the work machine 100 transmits an alert corresponding to the determination result of the determination part 330 to the information terminals 400a and 400b via the communication line 200 using the communication device T to cause the alert to be output via the information terminals 400a and 400b.

The communication line 200 may be a public line or a dedicated line.

The information terminals 400a and 400b are an example of an information output device according to the present disclosure, and may be a PC installed at a remote location, a portable terminal, such as a smartphone and the like, that is owned by a manager, an owner or a servicing person of the work machine 100, and the like.

The alert output operation of the work machine 100 configured as described above will be described below by citing a plurality of embodiments as examples.

### (First Embodiment)

The work machine 100 including the cab 10 that can be moved up and down as described above is basically prohibited from traveling in a state in which the cab 10 is elevated, from the viewpoint of the safety risk and an increase in the load on the machine. However, there are cases in which the work machine 100 is driven to travel in a state in which the cab 10 is elevated, for such reasons as work efficiency, operation convenience, and the like.

Therefore, as a first embodiment, an embodiment in which an alert is output when the work machine 100 is driven to travel in a state in which the cab 10 is elevated will be described.

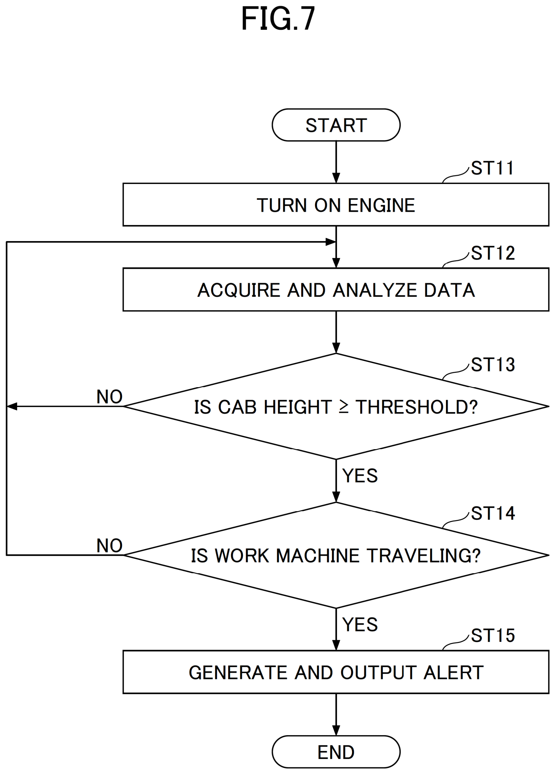

FIG. 7 is a flowchart for explaining the first embodiment of the alert output operation of the work machine 100.

When the engine 11 of the work machine 100 starts (step ST11), the controller 30 acquires data from the sensor for sensing the height of the cab 10 and the sensor for sensing the traveling state of the cab 10, and analyzes the data (step ST12).

For example, as described above, the cylinder length sensor 74 detects the length of the cab elevation cylinder 62. Therefore, the position sensing part 310 of the controller 30 can sense the height of the cab 10 by analyzing the length of the cab elevation cylinder 62 detected by the cylinder length sensor 74. In this case, for example, the position sensing part 310 previously stores the length of the cab elevation cylinder 62 in a state in which the cab elevation cylinder 62 is not extended, and analyzes whether the length of the cab elevation cylinder 62 has become longer than this length.

Also, as described above, the flow velocity sensors 21L and 21R detect the flow velocity of the hydraulic oil supplied to the left traveling hydraulic motor 20L and the right traveling hydraulic motor 20R. Therefore, for example, the speed sensing part 320 of the controller 30 senses the traveling state of the work machine 100 by analyzing the flow velocity of the hydraulic oil detected by the flow velocity sensors 21L and 21R.

Then, the determination part 330 determines whether or not the height of the cab 10 is equal to or higher than the predetermined height based on the analysis result of the position sensing part 310 in step ST12 (step ST13). Here, the predetermined height, which is the threshold for the determination, can be set desirably. For example, it may be determined whether or not the length of the cab elevation cylinder 62 detected by the cylinder length sensor 74 has become longer, even if only slightly, than the length in the state in which the cab elevation cylinder 62 is not extended. Moreover, the position sensing part 310 may previously store the length of the cab elevation cylinder 62 in a state in which the cab elevation cylinder 62 is fully extended, and determine whether or not the length of the cab elevation cylinder 62 detected by the cylinder length sensor 74 has become this length.

When it is determined that the height of the cab 10 is equal to or higher than the predetermined height (YES in step ST13), then the determination part 330 determines whether or not the work machine 100 is traveling based on the analysis result of the speed sensing part 320 in step ST12 (step ST14).

When it is determined that the work machine 100 is traveling (YES in step ST14), the display control part 340 generates an alert indicating by display information that the work machine 100 is traveling in the state in which the cab 10 is elevated, and causes the display device 35 to display and output the generated alert (step ST15). For example, the display device 35 may display and output by text or an image that the work machine 100 is traveling in the state where the cab 10 is elevated. An instruction for immediately stopping the work machine 100 may be displayed and output. Alternatively, a lamp may be simply lit or caused to blink.

When it is determined that the work machine 100 is traveling (YES in step ST14), the sound output control part 350 generates an alert indicating by sound information that the work machine 100 is traveling in the state in which the cab 10 is elevated, and outputs the generated alert from the loudspeaker SP (step ST15). For example, the loudspeaker SP may output by speech that the work machine 100 is traveling in the state in which the cab 10 is elevated, or may simply output an alert sound, such as a buzzer and the like. When the operator of the work machine 100 is wearing earphones, the generated alert may be output via the earphones. In addition, an instruction for immediately stopping the work machine 100 may be output by sound.

When it is determined that the work machine 100 is traveling (YES in step ST14), the communication part 360 transmits information indicating that the work machine 100 is traveling in the state in which the cab 10 is elevated to the information terminals 400a and 400b via the communication line 200 using the communication device T (step ST15). The information to be transmitted in this case is suited to the form of output from the information terminals 400a and 400b. For example, when displaying the information on the information terminals 400a and 400b, the communication part 360 transmits information indicating by display information that the work machine 100 is traveling in the state in which the cab 10 is elevated. When outputting the information by sound from the information terminals 400a and 400b, the communication part 360 transmits information for outputting by sound that the work machine 100 is traveling in the state in which the cab 10 is elevated. Moreover, the communication device T may transmit information to a loudspeaker installed in a work office to cause an alert to be output from the loudspeaker in the work office.

As described above, in the present embodiment, the work machine 100 including the elevatable cab 10 that can be moved up and down includes the controller 30 that determines, based on information on the driving state of the work machine 100, whether the traveling state of the work machine 100 is a predetermined traveling state in a state in which the cab 10 is elevated, and outputs an alert when determining that the traveling state of the work machine 100 is the predetermined traveling state in the state in which the cab 10 is elevated. As a result, the work machine 100 including the cab 10 can reduce the safety risk and an increase in the load on the machine, which are caused due to the traveling state of the work machine 100 in the state in which the cab 10 is elevated.

In this case, for example, the work machine 100 includes the cylinder length sensor 74 for sensing the height of the cab 10 and the flow velocity sensors 21L and 21R for sensing the traveling state of the work machine 100, and the controller 30 determines whether the traveling state of the work machine 100 is the predetermined traveling state in a state in which the cab 10 is elevated, by using the sensing result of the cylinder length sensor 74 and the sensing result of the flow velocity sensors 21L and 21R as information on the driving state of the work machine 100. With this configuration, information on the driving state of the work machine 100 can be easily acquired.

Further, in the present embodiment, the controller 30 outputs an alert when the height of the cab 10 is equal to or higher than the predetermined height and the traveling state of the work machine 100 indicates that the work machine 100 is traveling. With this configuration, an alert can be output when the work machine 100 performs the act of traveling in a state in which the cab 10 is elevated, which the work machine 100 including the cab 10 that can be moved up and down is basically prohibited from performing. Here, by displaying and outputting the alert via the display device 35 provided in the cab 10, it is possible to make the operator of the work machine 100 visually recognize that a prohibited act has been performed, and to thereby restrict the prohibited act and reduce the safety risk. Moreover, by outputting the alert by sound information from the loudspeaker SP provided in the cab 10, it is possible to make the operator of the work machine 100 audibly recognize that the prohibited act has been performed, and to thereby restrict the prohibited act and reduce the safety risk. Furthermore, by using the communication device T to display the alert or output the alert by sound information via the information terminals 400a and 400b, it is possible to notify the manager, the owner, or a servicing person at a remote location that the prohibited act has been performed. Thus, the manager, the owner, or the servicing person at the remote location can immediately recognize that the prohibited act has occurred. In this case, the manager or the owner who has been notified that the prohibited act has been performed can give a cautionary reminder to the operator, which makes it possible to reduce the safety risk and to reduce the load applied to the work machine 100. In addition, the servicing person who is notified that the prohibited act has been performed can recognize that the failure risk of the work machine 100 has increased due to the prohibited act having been performed. In addition, the manager or servicing person who is notified that the prohibited act has been performed can keep a record that the work machine 100 is the one on which the prohibited act has been performed in the past.

In addition, the determination part 330 may record the sensing result of the position sensing part 310 and the sensing result of the speed sensing part 320 as logs in time series. In this case, the sensing results can be recorded together with the date and time of the sensing, and then displayed in the form of a table or a graph. This makes it possible to keep track of the number of times and the frequency at which the prohibited act has been performed on the work machine 100 and to have an understanding of the failure risk due to the prohibited act having been performed. Moreover, also recording the operator who performed the prohibited act would be helpful for a follow-up tutorial or the like for the operator.

### (Second Embodiment)

As described above, the work machine 100 including the cab 10 that can be moved up and down is basically prohibited from traveling in a state in which the cab 10 is elevated. However, there are cases in which the work machine 100 is driven to travel in a state in which the cab 10 is elevated, for such reasons as work efficiency, operation convenience, and the like. Such cases include cases in which, depending on the balance with respect to work efficiency and operation convenience, it is acceptable to drive the work machine 100 to travel at a low speed, because this would not increase the safety risk so much.

Therefore, as a second embodiment ,an embodiment in which an alert is output when the work machine 100 is driven to travel at a speed equal to or higher than a predetermined speed in a state in which the cab 10 is elevated will be described.

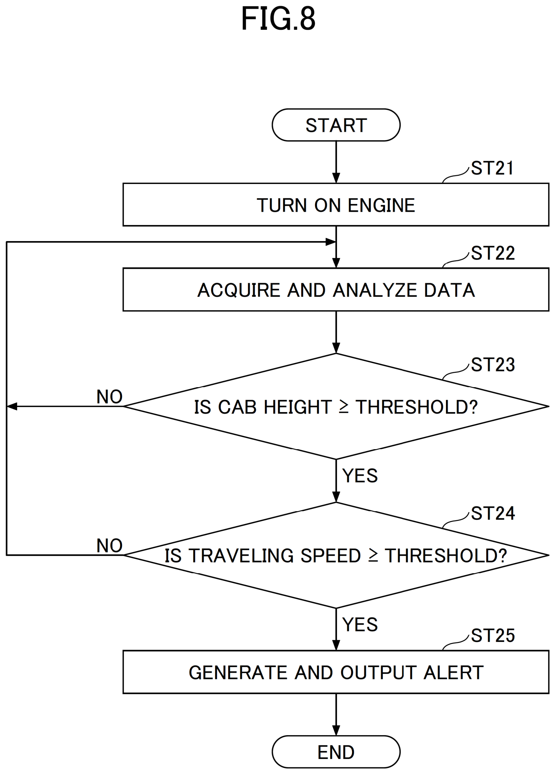

FIG. 8 is a flowchart for explaining the second embodiment of the alert output operation of the work machine 100.

When the engine 11 of the work machine 100 starts (step ST21), the controller 30 performs the same processes as those in steps ST12 and ST13 shown in FIG. 7 (steps ST22 and ST23).

When it is determined in step ST23 that the height of the cab 10 is equal to or higher than the predetermined height (YES in step ST23), the determination part 330 determines whether the traveling speed of the work machine 100 is equal to or higher than the predetermined speed based on the analysis result of the speed sensing part 320 in step ST22 (step ST24). The predetermined speed as the threshold for the determination can be set desirably. In this case, it is preferable that the predetermined speed is a speed at which the safety risk is low. In addition, since it is stressful for the work machine 100 to travel in a state in which the cab 10 is elevated, a less-stressful traveling speed may be previously measured, and this speed may be set as the predetermined speed.

When it is determined that the work machine 100 is traveling at a speed equal to or higher than the predetermined speed (YES in step ST24), an alert is generated and output in the same manner as in step ST15 shown in FIG. 7 (step ST25).

In the present embodiment, the display control part 340 generates an alert indicating by display information that the work machine 100 is traveling at a speed equal to or higher than the predetermined speed in a state in which the cab 10 is elevated, and causes the display device 35 to display and output the generated alert. For example, the display device 35 may display and output by text or an image that the work machine 100 is traveling at a speed equal to or higher than the predetermined speed in a state in which the cab 10 is elevated. In addition, an instruction for immediately stopping the work machine 100 or for reducing the traveling speed may be displayed and output. Alternatively, a lamp may be simply lit or caused to blink.

In addition, the sound output control part 350 generates an alert indicating by sound information that the work machine 100 is traveling at a speed equal to or higher than the predetermined speed in a state in which the cab 10 is elevated, and outputs the generated alert from the loudspeaker SP. For example, the loudspeaker SP may output by speech that the work machine 100 is traveling at a speed equal to or higher than the predetermined speed in a state in which the cab 10 is elevated, or may simply output an alert sound, such as a buzzer and the like. When the operator of the work machine 100 is wearing earphones, the generated alert may be output via the earphones. In addition, an instruction for immediately stopping the work machine 100 or for reducing the traveling speed may be output by sound.

In addition, the communication part 360 transmits information indicating that the work machine 100 is traveling at a speed equal to or higher than the predetermined speed in a state in which the cab 10 is elevated to the information terminals 400a and 400b via the communication line 200 using the communication device T. The information to be transmitted in this case is suited to the form of output from the information terminals 400a and 400b. For example, when displaying the information on the information terminals 400a and 400b, the communication part 360 transmits information indicating by display information that the work machine 100 is traveling at a speed equal to or higher than the predetermined speed in a state in which the cab 10 is elevated. When outputting the information by sound from the information terminals 400a and 400b, the communication part 360 transmits information for outputting by sound that the work machine 100 is traveling at a speed equal to or higher than the predetermined speed in a state in which the cab 10 is elevated. Moreover, the communication device T may transmit the information to a loudspeaker installed in a work office to output an alert from the loudspeaker in the work office.

As described above, in the present embodiment, the controller 30 outputs an alert when the height of the cab 10 is equal to or higher than the predetermined height and the traveling state of the work machine 100 indicates that the work machine 100 is traveling at a speed equal to or higher than the predetermined speed. With this configuration, it is possible to output an alert that balances the safety risk with the work efficiency and the operation convenience.

In the present embodiment, an alert is output when the height of the cab 10 is equal to or higher than the predetermined height and the traveling state of the work machine 100 is indicates that the work machine 100 is traveling at a speed equal to or higher than the predetermined speed. With this configuration, an alert that balances the safety risk with the work efficiency and the operation convenience is output. However, depending on the location to which an object lifted by the end attachment 6 is dropped down, there are cases in which it is necessary to drive the work machine 100 to travel. However, such cases include cases in which, depending on the balance with respect to the work efficiency and the operation convenience, it is acceptable to drive the work machine 100 to travel as long as the traveling distance of the work machine 100 is short, because this would not increase the safety risk so much.

Therefore, instead of the traveling speed of the work machine 100 as in the present embodiment, the traveling distance of the work machine 100 may be used to determine whether to output an alert. That is, the controller 30 may be configured to output an alert when the height of the cab 10 is equal to or higher than the predetermined height and the traveling state of the work machine 100 indicates that the work machine 100 is traveling the predetermined distance. In this case, since the speed sensing part 320 can sense the traveling state of the work machine 100, the determination part 330 can calculate the traveling distance of the work machine 100 based on the traveling speed and the traveling time of the work machine sensed by the speed sensing part 320. When the calculated traveling distance is equal to or longer than the predetermined distance, an alert is output. With this configuration, it is possible to output an alert that balances the safety risk with the actual work situation.

In addition, an alert may be output based on combination of these two embodiments. That is, the controller 30 may be configured to output an alert when the height of the cab 10 is equal to or higher than the predetermined height and the traveling state of the work machine 100 indicates that the work machine 100 has traveled the predetermined distance at a speed equal to or higher than the predetermined speed. With this configuration, it is possible to output an alert that balances the safety risk with the work efficiency and the operation convenience, and the actual work situation as well.

### (Third Embodiment)

As described above, the work machine 100 including the cab 10 that can be moved up and down is basically prohibited from traveling in a state in which the cab 10 is elevated. However, there are cases in which the work machine 100 is driven to travel in a state in which the cab 10 is elevated for such reasons as work efficiency, operation convenience, and the like. In this case, depending on the balance with respect to the work efficiency and operation convenience, it may be acceptable to drive the work machine 100 to travel at a low speed only for a short time, because this would not increase the safety risk so much.

Therefore, as a third embodiment, an embodiment in which an alert is output when the work machine 100 ha been driven to travel at a speed equal to or higher than a predetermined speed for a time equal to or longer than a predetermined time continuously in a state in which the cab 10 is elevated will be described.

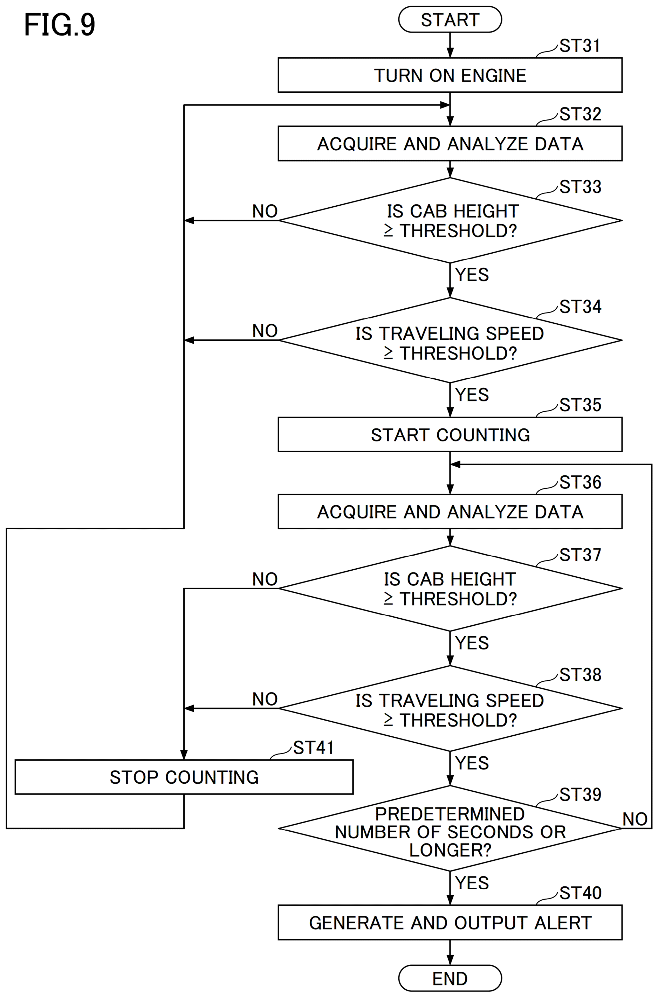

FIG. 9 is a flowchart for explaining the third embodiment of the alert output operation of the work machine 100.

When the engine 11 of the work machine 100 starts (step ST31), the controller 30 performs the same processes as in steps ST12 to ST14 shown in FIG. 7 (steps ST32 to ST34).

Then, when it is determined in step ST34 that the work machine 100 is traveling at a speed equal to or higher than the predetermined speed (YES in step ST34), the determination part 330 starts counting time in seconds (step ST35).

Then, the same processes as in steps ST32 to ST34 are performed (steps ST36 to ST38), and when it is determined in step ST38 that the work machine 100 is traveling at a speed equal to or higher than the predetermined speed (YES in step ST38), the determination part 330 determines whether time has been counted for a time equal to or longer than a predetermined number of seconds (step ST39).

Then, in a case where time has been counted for a time equal to or longer than the predetermined number of seconds (YES in step ST39), an alert is generated and output in the same manner as in step ST15 shown in FIG. 7 (step ST40). The predetermined number of seconds, which serves as the threshold for the determination, can be set desirably. In this case, it is preferable that the predetermined number of seconds is one that would not cause safety risk. In addition, since it is stressful for the work machine 100 to travel in a state in which the cab 10 is elevated, a less-stressful number of seconds may be measured previously, and this number of seconds may be set as the predetermined number of seconds.

In the present embodiment, the display control part 340 generates an alert indicating by display information that the work machine 100 has been traveling at a speed equal to or higher than the predetermined speed for a time equal to or longer than the predetermined number of seconds in state in which the cab 10 is elevated, and causes the display device 35 to display and output the generated alert. For example, the display device 35 may display and output by text or an image that the work machine 100 has been traveling at a speed equal to or higher than the predetermined speed for a time equal to or longer than the predetermined number of seconds in a state in which the cab 10 is elevated. Alternatively, an instruction for stopping the work machine 100 immediately or for reducing the traveling speed may be displayed and output. Alternatively, a lamp may be simply lit or caused to blink. Alternatively, the display device may simply display and output by text that the prohibited act has been continuously performed for the predetermined time.

Further, the sound output control part 350 generates an alert indicating by sound information that the work machine 100 has been traveling at a speed equal to or higher than the predetermined speed for a time equal to or longer than the predetermined number of seconds in a state in which the cab 10 is elevated, and outputs the generated alert from the loudspeaker SP. For example, the loudspeaker SP may output by speech that the work machine 100 has been traveling at a speed equal to or higher than the predetermined speed for a time equal to or longer than the predetermined number of seconds in a state in which the cab 10 is elevated, or may simply output an alert sound, such as a buzzer and the like. Furthermore, the loudspeaker SP may simply output that the prohibited act has been continuously performed for the predetermined time. When the operator of the work machine 100 is wearing earphones, the generated alert may be output via the earphones. Moreover, an instruction for stopping the work machine 100 immediately or for reducing the traveling speed may be output by sound.

In addition, the communication part 360 transmits information indicating that the work machine 100 has been traveling at a speed equal to or higher than the predetermined speed for a time equal to or longer than the predetermined number of seconds in a state in which the cab 10 is elevated to the information terminals 400a and 400b via the communication line 200 using the communication device T. The information to be transmitted in this case is suited to the form of output from the information terminals 400a and 400b. For example, when displaying the information on the information terminals 400a and 400b, the communication part 360 transmits information indicating by display information that the work machine 100 has been traveling at a speed equal to or higher than the predetermined speed for a time equal to or longer than the predetermined number of seconds in a state in which the cab 10 is elevated. In addition, when outputting the information by speech from the information terminals 400a and 400b, the communication part 360 transmits information for outputting by sound that the work machine 100 has been traveling at a speed equal to or higher than the predetermined speed for a time equal to or longer than the predetermined number of seconds in a state in which the cab 10 is elevated. In addition, the communication device T may transmit information to a loudspeaker installed in a work office and output an alert from the loudspeaker in the work office.

On the other hand, when it is determined in step ST37 that the height of the cab 10 is not equal to or higher than the predetermined height after counting time in seconds is started in step ST35 (NO in step ST37), counting time in seconds is stopped (step ST41) and the flow returns to step ST32. Also, when it is determined in step ST38 that the work machine 100 is not traveling at a speed equal to or higher than the predetermined speed after counting time in seconds is started in step ST35 (NO in step ST38), counting time in seconds is stopped (step ST41) and the flow returns to step ST32.

As described above, in the present embodiment, the controller 30 outputs an alert when the height of the cab 10 is equal to or higher than the predetermined height and the traveling state of the work machine 100 indicates that the work machine 100 has continued traveling at a speed equal to or higher than the predetermined speed for the predetermined time. With this configuration, it is possible to output an alert that balances the safety risk with the work efficiency and the operation convenience.

In the present embodiment, an alert is output when the height of the cab 10 is equal to or higher than the predetermined height and the traveling state of the work machine 100 indicates that the work machine 100 has continued traveling at a speed equal to or higher than the predetermined speed for the predetermined time. However, for the determination for whether to output an alert, it may be determined whether the work machine 100 is traveling as described in the first embodiment, instead of whether the work machine 100 is traveling at a speed equal to or higher than the predetermined speed. That is, the controller 30 may output an alert when the height of the cab 10 is equal to or higher than the predetermined height and the traveling state of the work machine 100 indicates that the work machine 100 has continued traveling for a predetermined time. Even with such a configuration, it is possible to output an alert that balances the safety risk with the actual work situation.

The above-described embodiments can be applied to any work machine as long as it includes an elevator cab.

Although the preferred embodiments of the present disclosure have been described in detail above, the present disclosure is not limited to the above-described embodiments, and various modifications and substitutions are applicable to the above-described embodiments without departing from the scope of the present disclosure.

## Claims

1. A work machine including an elevator cab, the work machine comprising:
a control part configured to determine, based on information on a driving state of the work machine, whether a traveling state of the work machine is a predetermined traveling state in a state in which the elevator cab is elevated, and output an alert when determining that the traveling state of the work machine is the predetermined traveling state in the state in which the elevator cab is elevated.

2. The work machine according to claim 1, further comprising:
a first sensing part configured to sense a height of the elevator cab; and
a second sensing part configured to sense the traveling state of the work machine,
wherein the control part determines whether or not the traveling state of the work machine is the predetermined traveling state in the state in which the elevator cab is elevated, by using a sensing result of the first sensing part and a sensing result of the second sensing part as the information on the driving state.

3. The work machine according to claim 2,
wherein the control part outputs the alert when the height of the elevator cab sensed by the first sensing part is equal to or higher than a predetermined height and the traveling state of the work machine sensed by the second sensing part indicates that the work machine is traveling.

4. The work machine according to claim 3,
wherein the control part outputs the alert when the height of the elevator cab sensed by the first sensing part is equal to or higher than the predetermined height and the traveling state of the work machine sensed by the second sensing part indicates that the work machine has traveled a predetermined distance.

5. The work machine according to claim 3,
wherein the control part outputs the alert when the height of the elevator cab sensed by the first sensing part is equal to or higher than the predetermined height and the traveling state of the work machine sensed by the second sensing part indicates that the work machine has continued traveling for a predetermined time.

6. The work machine according to claim 2,
wherein the control part outputs the alert when the height of the elevator cab sensed by the first sensing part is equal to or higher than a predetermined height and the traveling state of the work machine sensed by the second sensing part indicates that the work machine is traveling at a speed equal to or higher than a predetermined speed.

7. The work machine according to claim 6,
wherein the control part outputs the alert when the height of the elevator cab sensed by the first sensing part is equal to or higher than the predetermined height and the traveling state of the work machine sensed by the second sensing part indicates that the work machine has traveled a predetermined distance at a speed equal to or higher than the predetermined speed.

8. The work machine according to claim 6,
wherein the control part outputs the alert when the height of the elevator cab sensed by the first sensing part is equal to or higher than the predetermined height and the traveling state of the work machine sensed by the second sensing part indicates that the work machine is traveling at a speed equal to or higher than the predetermined speed for a predetermined time.

9. The work machine according to claim 1, further comprising:
a display part provided in the elevator cab,
wherein the control part outputs the alert via the display part.

10. The work machine according to claim 1, further comprising:
a sound output part provided in the elevator cab,
wherein the control part outputs the alert via the sound output part.

11. The work machine according to claim 1,
wherein the control part transmits the alert to an information output device via a communication line and outputs the alert via the information output device.

12. The work machine according to claim 2,
wherein the control part records the sensing result of the first sensing part and the sensing result of the second sensing part in time series.

13. A control device for controlling a work machine including an elevator cab,
wherein the control device is configured to determine, based on information on a driving state of the work machine, whether a traveling state of the work machine is a predetermined traveling state in a state in which the elevator cab is elevated, and output an alert when determining that the traveling state of the work machine is the predetermined traveling state in the state in which the elevator cab is elevated.
